(19) Europäisches Patentamt
European Patent Office
Office européen des brevets

(11) **EP 1 654 703 B1**

(12) **EUROPEAN PATENT SPECIFICATION**

(45) Date of publication and mention
of the grant of the patent:
**20.06.2007 Bulletin 2007/25**

(51) Int Cl.:
***G06T 7/20*** (2006.01)

(21) Application number: **04744704.0**

(22) Date of filing: **02.08.2004**

(86) International application number:
**PCT/IB2004/051352**

(87) International publication number:
**WO 2005/015496 (17.02.2005 Gazette 2005/07)**

(54) **GRAPHICS OVERLAY DETECTION**

DETEKTION VON GRAFIK-ÜBERLAGERUNGEN

DETECTION DE SUPERPOSITION GRAPHIQUE

(84) Designated Contracting States:
**AT BE BG CH CY CZ DE DK EE ES FI FR GB GR
HU IE IT LI LU MC NL PL PT RO SE SI SK TR**

(30) Priority: **07.08.2003 EP 03102457**

(43) Date of publication of application:
**10.05.2006 Bulletin 2006/19**

(73) Proprietor: **Koninklijke Philips Electronics N.V.
5621 BA Eindhoven (NL)**

(72) Inventor: **PIEK, Matthijs, C.
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**US-A1- 2002 113 901**

- **TSENG B L ET AL: "Improved text overlay detection in videos using a fusion-based classifier" CONFERENCE PROCEEDINGS ARTICLE, vol. 3, 6 July 2003 (2003-07-06), pages 473-476, XP010650360**
- **DONGQING ZHANG ET AL: "A bayesian framework for fusing multiple word knowledge models in videotext recognition" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 2 OF 2, 18 June 2003 (2003-06-18), pages 528-533, XP010644715 ISBN: 0-7695-1900-8**

EP 1 654 703 B1

**Description**

The invention relates to an overlay detection unit for detecting whether a particular pixel of a first image of a display sequence of video images represents a part of a graphics overlay which is merged with an input sequence of video images to create the display sequence of video images.

The invention further relates to an image processing apparatus comprising:

- receiving means for receiving a signal corresponding to a display sequence of video images;
- an overlay detection unit as described above; and
- an image processing unit for calculating a sequence of output images on basis of the display sequence of video images and on basis of a graphics overlay detection signal being provided by the overlay detection unit.

The invention further relates to a method of detecting whether a particular pixel of a first image of a display sequence of video images represents a part of a graphics overlay which is merged with an input sequence of video images to create the display sequence of video images.

The invention further relates to a computer program product to be loaded by a computer arrangement, comprising instructions to detect whether a particular pixel of a first image of a display sequence of video images represents a part of a graphics overlay which is merged with an input sequence of video images to create the display sequence of video images, the computer arrangement comprising processing means and a memory.

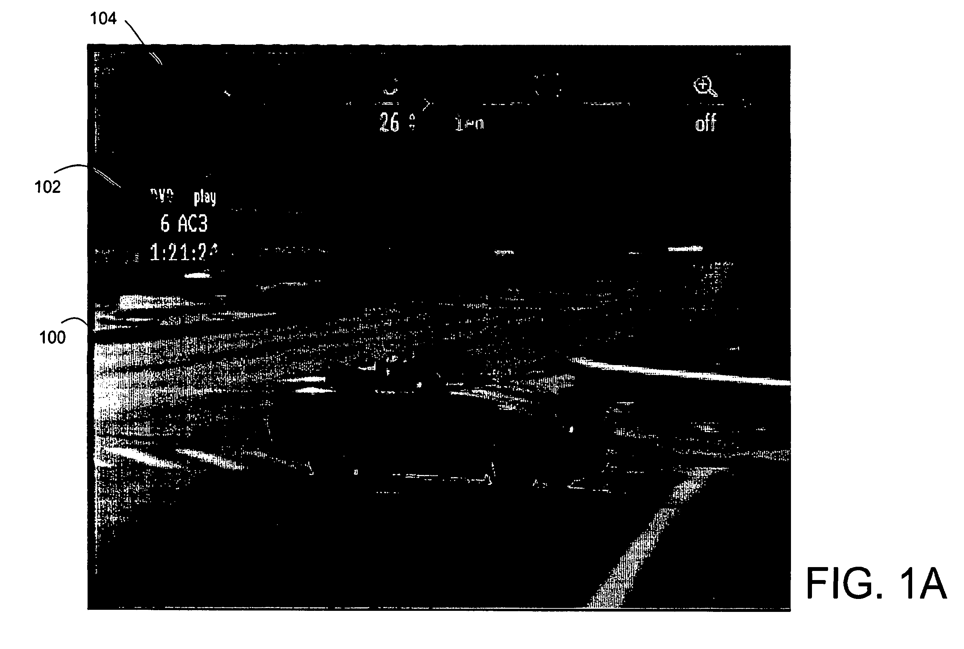

Picture rate conversion, and more particular picture rate upconversion is a well known concept in consumer video equipment like TV sets. See for instance chapter 4 of the book "Video processing for multimedia systems", by G. de Haan, ISBN 90-9014015-8. The purpose of motion compensated picture rate upconversion is to achieve a nice motion portrayal. This is achieved by means of temporal interpolation of a sequence of images on basis of motion vectors being estimated for the images of the sequence. Typically, the different motion vectors are computed for blocks of pixels, e.g. 8*8 pixels. If the images comprise a graphics overlay, which is typically stationary over time, and also represent moving objects then known picture rate upconversion methods result in break-up of the graphics overlay. See for instance the picture of Fig. 1A.

The graphics overlays might correspond to sub-titles or other graphics information being provided by the content provider or broadcaster. The graphics overlays might also correspond to so-called OSD (On Screen Display) information being generated as part of the graphics user interface of a consumer device like a TV-set, a set top box, a satellite-tuner, a VCR (Video Cassette Recorder) player, a DVD (Digital Versatile Disk) player or recorder. A further option is that the graphics overlays corresponds to meta-data being exchanged in connection with the video data.

TSENG B L ET AL: "Improved text overlay detection in videos using a fusion based classifier" CONFERENCE PROCEEDINGS ARTICLE, vol. 3, 6 July 2003, pages 473-476, XP010650360 discloses a method of overlay detection of videos. Basically it is a normalized ensemble function which is used to combine two text overlay detection models. The fusion incorporates normalization of confidence scores, aggregation via a combiner function and an optimize selection.

The break-up, i.e. distortion of the graphics overlay happens when the graphics overlay covers only a small portion of a block of pixels being used for the motion estimation, while the other portion of that block of pixels corresponds to the moving background. Typically a single motion vector is being estimated for each block of pixels. As a result, this single motion vector does not fit to the actual motion of all pixels in such a block of pixels. If the match error is minimal for the portion of the block of pixels corresponding to the moving background then the estimated motion vector matches to the background motion. Although this causes a relatively large portion of the block of pixels to be correctly motion compensated, this causes distortion of the graphics overlay and hence annoying degradation of the video quality.

It is an object of the invention to provide an overlay detection unit of the kind described in the opening paragraph which is arranged to detect graphics overlays in a robust way.

This object of the invention is achieved in that the overlay detection unit comprises:

- first testing means for testing whether a first difference between a first value of the particular pixel and a second value of a corresponding pixel of a second image of the display sequence of video images is less than a first predetermined threshold;
- second testing means for testing whether a second difference between a third value of a second pixel, being located in a spatial neighborhood of the particular pixel, and a fourth value of a fourth pixel of the second image of the display sequence of video, corresponding to the second pixel, images is less than a second predetermined threshold;
- third testing means for testing whether a third difference between the first value of the particular pixel and the third value of the second pixel is less than a third predetermined threshold; and
- establishing means for establishing that the particular pixel represents the part of the graphics overlay if the first difference is less than the first predetermined threshold, the second difference is less than the second predetermined threshold and the third difference is less than the third predetermined threshold.

In other words, three tests are performed and the three test results are combined to establish whether the particular pixel represents a part of a graphics overlay. A first test is a type of stationary test. That means that it is tested whether the particular pixel and the pixel in a previous or succeeding image, having the same coordinates as the particular pixel, have substantially equal values. The values represent human visible information, e.g. luminance or color. A second test is also a type of stationary test, however not being applied for the particular pixel but for another pixel (called second pixel) in the neighborhood of the particular pixel. With neighborhood is meant a region of e.g. 21 *21 pixels. The third test is a type of homogeneity test. That means that it is tested whether the particular pixel and the other pixel (called second pixel) in the neighborhood of the particular pixel have substantially equal values. If all tests are positive, then the particular pixel is assumed to be part of a graphics overlay and is labeled as such. The combination of stationary and homogeneity tests results in a robust detection of graphics overlays.

Preferably the first predetermined threshold and the second predetermined threshold are mutually equal.

An embodiment of the overlay detection unit according to the invention further comprises fourth testing means for testing whether the particular pixel belongs to a group of pixels for which a first motion vector has been estimated which is equal to a null motion vector. By first segmenting the image, for which a graphics overlay detection has to be performed, by means of a motion vector field, a further enhancement of the robustness of the detection is achieved. The segmenting means that blocks of pixels having a motion vector being equal to zero are separated from blocks of pixels having a motion vector which differs from zero. The overlay detection unit is initialized on basis of the motion vector field. The detection of representing a part of a graphics overlay is performed as described above for those pixels of the first image having been assigned a zero motion vector. Afterwards, a kind of growing or dilatation is optionally performed for those pixels having been assigned a non-zero motion vector. The initialization on basis of the motion vector field is advantageous for the computational complexity and for the robustness of the detection. The motion vector field is preferably computed for the first image but might also have been computed for the second image.

An embodiment of the overlay detection unit according to the invention is arranged to test whether a fourth difference between the first value of the particular pixel and a fourth value of a corresponding pixel of a third image of the display sequence of video images is less than the first predetermined threshold. By means of an additional stationary test on basis of a third image, the robustness of detection is further increased.

An embodiment of the overlay detection unit according to the invention is arranged to test whether a fifth difference between the first value of the particular pixel and a fourth value of a third pixel, being located in the spatial neighborhood of the particular pixel is less than the third predetermined threshold. By means of an additional homogeneity test on basis of a third pixel of the first image, the robustness of detection is further increased. Preferably the particular pixel, the second pixel and the third pixel form a set of mutually connected pixels, or in other words there is a path of adjacent pixels. Testing the condition of connectivity of pixels is advantageous for the robustness.

In an embodiment of the overlay detection unit according to the invention the second pixel is chosen from a set of pixels for which has been established that it represents a further part of the graphics overlay. This embodiment according to the invention is arranged to perform a kind of second iteration over the first image in order to grow, or extend, the set of pixels which have been labeled to represent a part of a graphics overlay, in the first scan over the first image. The quality of detection is further increased by means of the second iteration.

It is a further object of the invention to provide an image processing apparatus of the kind described in the opening paragraph of which the overlay detection unit is arranged to detect graphics overlays in a robust way.

This object of the invention is achieved in that the overlay detection unit comprises:

- first testing means for testing whether a first difference between a first value of the particular pixel and a second value of a corresponding pixel of a second image of the display sequence of video images is less than a first predetermined threshold;
- second testing means for testing whether a second difference between a third value of a second pixel, being located in a spatial neighborhood of the particular pixel, and a fourth value of a fourth pixel of the second image of the display sequence of video, corresponding to the second pixel, images is less than a second predetermined threshold;
- third testing means for testing whether a third difference between the first value of the particular pixel and the third value of the second pixel is less than a third predetermined threshold; and
- establishing means for establishing that the particular pixel represents the part of the graphics overlay if the first difference is less than the first predetermined threshold, the second difference is less than the second predetermined threshold and the third difference is less than the third predetermined threshold.

The image processing unit might be a temporal up-conversion unit which is arranged to protect the detected parts of the graphics overlay. The image processing unit optionally comprises a display device for displaying the output images.

It is a further object of the invention to provide a method of the kind described in the opening paragraph of which detects graphics overlays in a robust way.

This object of the invention is achieved in that the method comprises:

- testing whether a first difference between a first value of the particular pixel and a second value of a corresponding pixel of a second image of the display sequence of video images is less than a first predetermined threshold;
- testing whether a second difference between a third value of a second pixel, being located in a spatial neighborhood of the particular pixel, and a fourth value of a fourth pixel of the second image of the display sequence of video images, corresponding to the second pixel, is less than a second predetermined threshold;
- testing whether a third difference between the first value of the particular pixel and the third value of the second pixel is less than a third predetermined threshold; and
- establishing that the particular pixel represents the part of the graphics overlay if the first difference is less than the first predetermined threshold, the second difference is less than the second predetermined threshold and the third difference is less than the third predetermined threshold.

It is a further object of the invention to provide a computer program product of the kind described in the opening paragraph of which detects graphics overlays in a robust way.

This object of the invention is achieved in that the computer program product, after being loaded, provides said processing means with the capability to carry out:

- testing whether a first difference between a first value of the particular pixel and a second value of a corresponding pixel of a second image of the display sequence of video images is less than a first predetermined threshold;
- testing whether a second difference between a third value of a second pixel, being located in a spatial neighborhood of the particular pixel, and a fourth value of a fourth pixel of the second image of the display sequence of video images, corresponding to the second pixel, is less than a second predetermined threshold;
- testing whether a third difference between the first value of the particular pixel and the third value of the second pixel is less than a third predetermined threshold; and
- establishing that the particular pixel represents the part of the graphics overlay if the first difference is less than the first predetermined threshold, the second difference is less than the second predetermined threshold and the third difference is less than the third predetermined threshold.

Modifications of the overlay detection unit and variations thereof may correspond to modifications and variations of the image processing apparatus, the method and the computer program product, being described.

These and other aspects of the overlay detection unit, of the image processing apparatus, of the method and of the computer program product, according to the invention will become apparent from and will be elucidated with respect to the implementations and embodiments described hereinafter and with reference to the accompanying drawings, wherein:

Fig. 1A shows an output image of an up-conversion unit according to the prior art;
Fig. 1B shows an output image of an up-conversion unit according to the invention;
Fig. 2A schematically shows two consecutive images of an input sequence of video images;
Fig. 2B schematically shows three consecutive images of an input sequence of video images;
Fig. 3A schematically shows an embodiment of the overlay detection unit according to the invention;
Fig. 3B schematically shows an alternative embodiment of the overlay detection unit according to the invention; and
Fig. 4 schematically shows an embodiment of the image processing apparatus according to the invention.

Same reference numerals are used to denote similar parts throughout the figures.

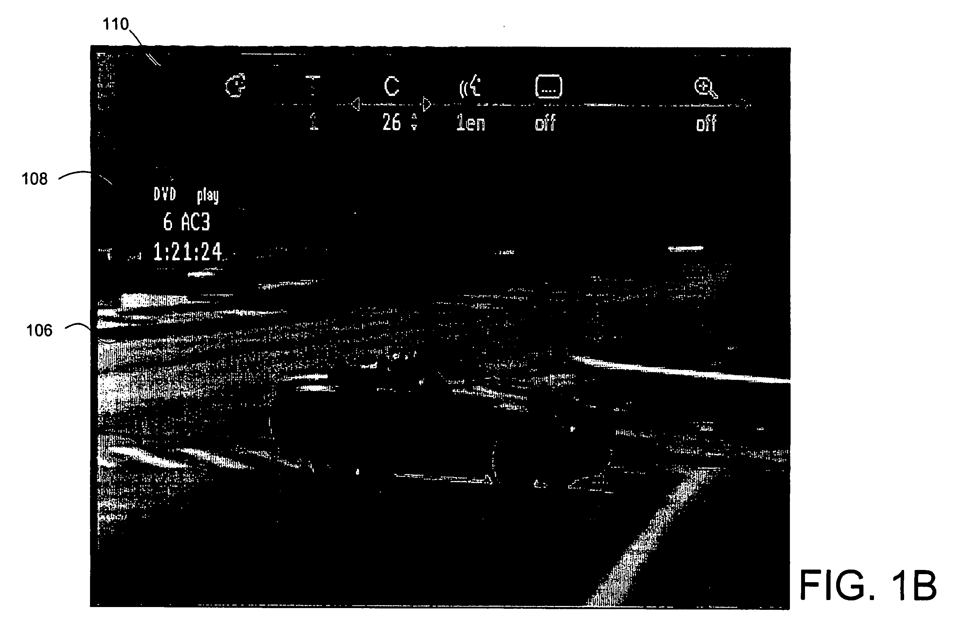

Fig. 1A shows an output image 100 of an up-conversion unit of the prior art. The output image 100 is based on temporal interpolation of input images. The input images correspond to a part of a movie in which a car is driving in the streets. During the acquisition of the input images the camera was panning in order to keep the car in the center of the consecutive images. As a consequence, the most motion vectors being estimated for the input images are unequal to zero. The output image 100 further comprises graphics overlays which have been created by a DVD player and blended with the images as stored on the DVD. The mixed images, i.e. mix of images as stored and the graphics overlays, are used for the up-conversion. Unfortunately, the up-conversion results in visible artifacts in the graphics overlays 102 and 104. That means that the output image 100 as provided by the up-conversion unit according to the prior art comprises graphics overlays 102 and 104 which are less visible than required. It can be clearly seen that the representation 102 of some textual information, e.g. the string "1:21:24" is distorted. When comparing the output image 100 provided by the up-conversion unit according to the prior art with an other output image 106, as shown in Fig. 1B, being provided by an up-conversion unit according to the invention, it can be observed that the representation 110 of some icons is substantially improved.

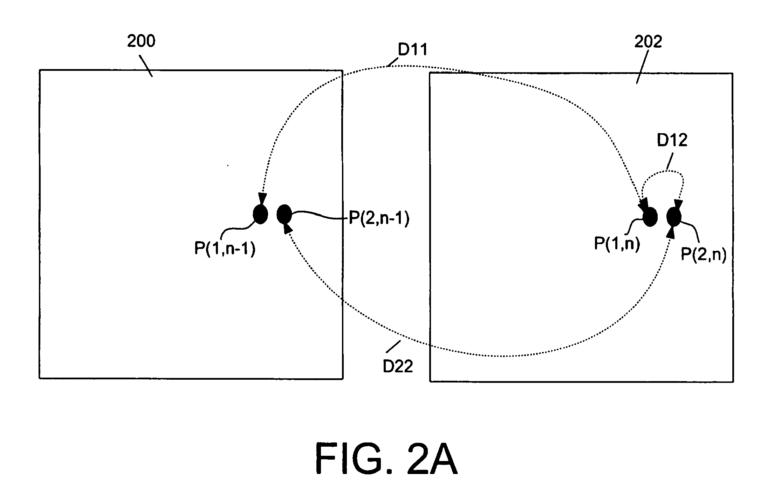

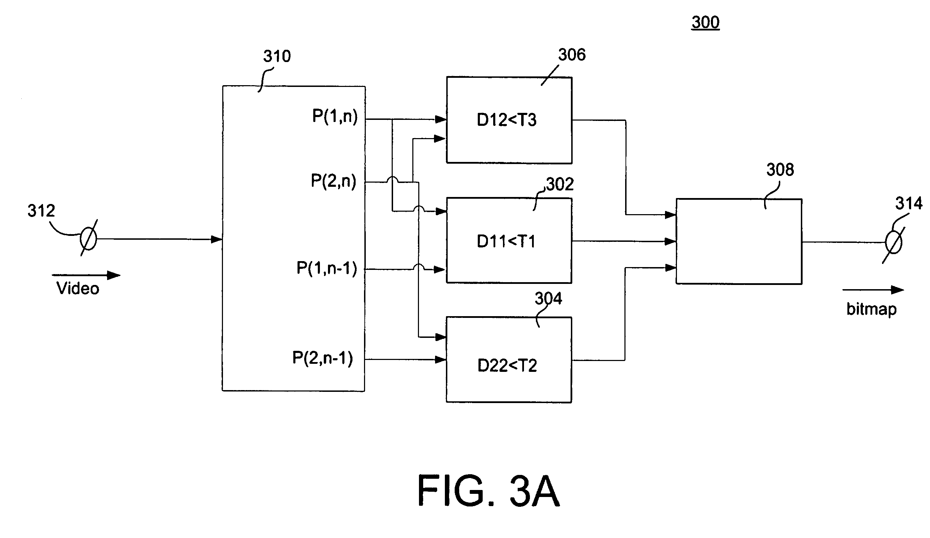

Fig. 2A schematically shows two consecutive images 200 and 202 of an input sequence of video images and a number of pixels P(1,n), P(1,n-1), P(2,n) and P(2,n-1) of these images. To determine whether a particular pixel P(1,n) represents a part of a graphics overlay a number of tests are performed, i.e. a number of differences D11, D12 and D22 are computed and compared with respective thresholds. This is described in more detail in connection with Fig. 3A.

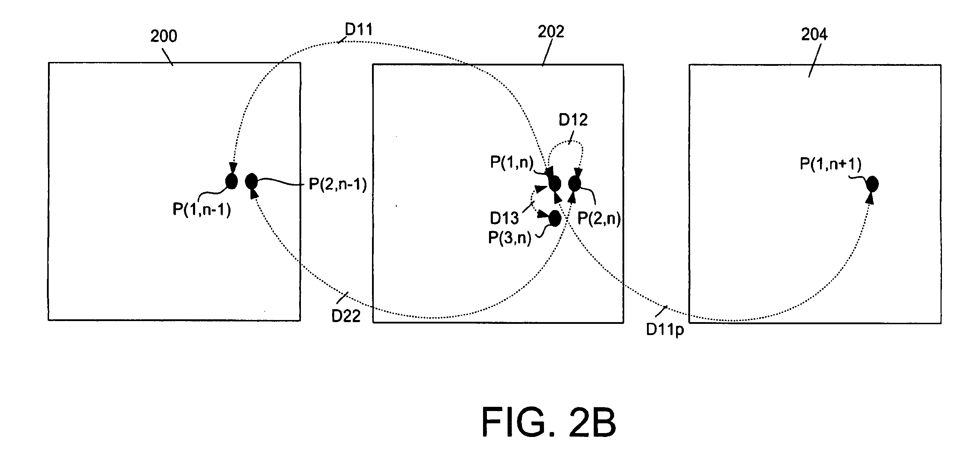

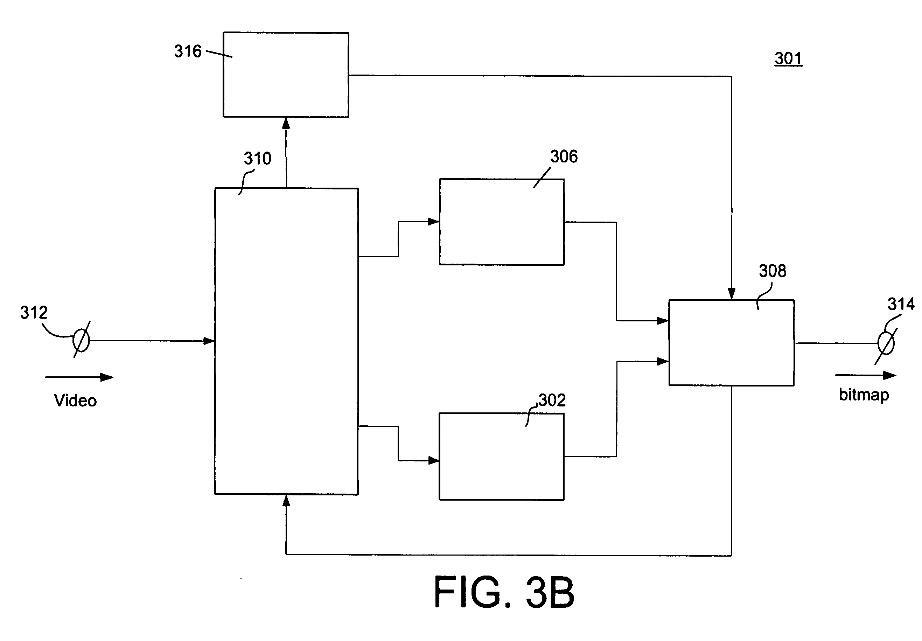

Fig. 2B schematically shows three consecutive images 200-204 of an input sequence of video images and a number of pixels P(1,n), P(1,n-1), P(1,n+1), P(2,n), P(2,n-1) and P(3,n) of these images. To determine whether a particular pixel P(1,n) represents a part of a graphics overlay, a number of tests are performed, i.e. a number of differences D11, D12, D13, D22 and D11p are computed and compared with respective thresholds. This is described in more detail in connection with Fig. 3B.

Fig. 3A schematically shows an embodiment of the overlay detection unit 300 according to the invention. The overlay detection unit 300 is provided with a video signal corresponding to a display sequence of video images. This display sequence of video images might be based on an input sequence of video images which is merged with a graphics overlay. The overlay detection unit 300 is arranged to detect whether a particular pixel of a first image of the display sequence of video images represents a part of such a graphics overlay. The overlay detection unit 300 comprises:

- a first evaluation unit 302 for testing whether a first difference D11 between a first value of the particular pixel P(1,n) and a second value of a corresponding pixel P(1,n-1) of a second image of the display sequence of video images is less than a first predetermined threshold T1;
- a second evaluation unit 304 for testing whether a second difference D22 between a third value of a second pixel P(2,n), being located in a spatial neighborhood of the particular pixel P(1,n), and a fourth value of a fourth pixel P(2,n-1) of the second image of the display sequence of video images, corresponding to the second pixel P(2,n), is less than a second predetermined threshold T2;
- a third evaluation unit 306 for testing whether a third difference D12 between the first value of the particular pixel P(1,n) and the third value of the second pixel P(2,n) is less than a third predetermined threshold T3; and
- a combining unit 308 for establishing that the particular pixel represents the part of the graphics overlay if the first difference D11 is less than the first predetermined threshold T1, the second difference D22 is less than the second predetermined threshold T2 and the third difference D12 is less than the third predetermined threshold T3.

The overlay detection unit 300 optionally comprises a memory device 310 for temporarily storage of video images and intermediate results. Alternatively, the memory device 310 is shared with other components of the apparatus to which the overlay detection unit 300 belongs.

The output of the overlay detection unit 300 is provided at the output connector 314. Preferably, the output is a binary bitmap per input image indicating per pixel of the input image whether that pixel corresponds to a part of a graphics overlay or not. Alternatively, the output is a multi-dimensional signal comprising appropriate color or luminance values for those pixels for which has been established that they represent a part of a graphics overlay.

The pixels of the images of the display sequence of video images are evaluated in a scanning approach. This scanning might be line by line or column by column. Each pixel for which holds that its value is temporarily stationary and substantially equal to a value of a second pixel of which its value is also temporarily stationary, is labeled as representing a part of a graphics overlay.

Preferably, pixels of consecutive images having mutually equal coordinates are compared. Alternatively, pixels of consecutive images being related by motion vectors are compared. Hence, "corresponding" does not necessarily mean equal coordinates.

The first evaluation unit 302, the second evaluation unit 304, the third evaluation unit 306 and the combining unit 308 may be implemented using one processor. Normally, these functions are performed under control of a software program product. During execution, normally the software program product is loaded into a memory, like a RAM, and executed from there. The program may be loaded from a background memory, like a ROM, hard disk, or magnetically and/or optical storage, or may be loaded via a network like Internet. Optionally an application specific integrated circuit provides the disclosed functionality.

Fig. 3B schematically shows an alternative embodiment of the overlay detection unit 301 according to the invention. The input and output of this embodiment of the overlay detection unit 301 is equal to the input and output of the embodiment of the overlay detection unit 300 as described in connection with Fig. 3A. This embodiment of the overlay detection unit 300 is arranged to detect whether the pixels represent respective parts of graphics overlays on basis of three consecutive images.

The overlay detection unit 301 comprises:

- a first evaluation unit 302 for testing temporal stability, e.g. whether a first difference D11 between a first value of the particular pixel P(1,n) and a second value of a corresponding pixel P(1,n-1) of a second image of the display sequence of video images is less than a first predetermined threshold T1 and whether a fourth difference D11p between the first value of the particular pixel P(1,n) and a first value of a corresponding pixel P(1,n+1) of a third image of the display sequence of video images is less than the first predetermined threshold T1;

- a third evaluation unit 306 for testing homogeneity, e.g. whether a third difference D12 between the first value of the particular pixel P(1,n) and the third value of the second pixel P(2,n) is less than a third predetermined threshold T3 and whether a fifth difference D13 between the first value of the particular pixel P(1,n) and the fifth value of a third pixel P(3,n) is less than a third predetermined threshold T3; and

- a combining unit 308 for establishing that the particular pixel represents the part of the graphics overlay on basis of the output of the evaluation units 302 and 306.

The overlay detection unit 301 optionally comprises a motion estimation unit 316 for computing motion vectors. Alternatively, the motion estimation unit 316 is shared with other components of the apparatus to which the overlay detection unit 301 belongs. The motion estimation unit 316 is e.g. as specified in the article "True-Motion Estimation with 3-D Recursive Search Block Matching" by G. de Haan et. al. in IEEE Transactions on circuits and systems for video technology, vol. 3, no. 5, October 1993, pages 368-379.

The combining unit 308 is connected to the motion estimation unit 316 to receive information about motion. This information is used by the combining unit 308 as will be explained below. The combining unit 308 is also connected to the memory device 310 for temporarily storage of intermediate results.

The working of the overlay detection unit 301 is as follows. The first step is the stationary test and is performed by the first evaluation unit 302. This step is to initialize the overlay detection unit 301 with potentially static pixels. All pixels which have been static during the three video images and for which the motion estimation unit 316 has found a zero vector are labeled with a value of 1. To be more precise, Equation 2 specifies which pixels $\vec{p}$ are labeled with a value of 1. All other pixels are labeled with a value of 0. The check on being static is based on function $S(\vec{p}, \alpha)$ as specified in Equation 1.

$$S(\vec{p}, \alpha) = (\max_{i,j=n-1}^{n+1} \left| f(\vec{p}, i) - f(\vec{p}, j) \right|) < \alpha \qquad (1)$$

The function $S(\vec{p}, \alpha)$ checks against a first predetermined threshold $\alpha$ to determine if the luminance value of pixel $\vec{p}$ has remained stable over time, i.e. substantially the same value for three consecutive images. $f(\vec{p}, n)$ is the luminance for pixel $\vec{p}$ in image $n$.

$$l(\vec{p}) = \begin{cases} 1 & if \quad \vec{d}(\vec{p}) = \vec{0} \wedge S(\vec{p}, \alpha) \\ 0 & otherwise \end{cases}$$

with $\vec{d}(\vec{p})$ the motion vector for pixel $\vec{p}$. The zero-vector check is optional, but experiments have proved that the results are significantly less robust without the check. For the zero-vector check, the vector field of image n-1, n or n+1 can be used.

The next step is the shrinking step, based on a homogeneity test and is performed by the third evaluation unit 306. The shrinking step removes the falsely detected pixels. For every pixel $\vec{p}$ labeled with a value of 1, a region of connected pixels $\overline{q}$ is determined for which holds:

- pixel $\vec{q}$ is within a spatial neighborhood of N*M pixels. Typically N*M=21*21 pixels;
- the pixel values of $\vec{p}$ and $\vec{q}$ are substantially mutually equal. Hence, $|f(\vec{p}) - f(\vec{q})| < \beta$. This similarity measure can be calculated using luminance, or both luminance and chrominance; and
- $\vec{q}$ is connected to $\vec{p}$ by a path of pixels which adhere to the above two conditions. This condition is not strictly necessary. Without it, the detection method is less robust, but also significantly less computationally expensive.

If for the majority of these pixels $S(\vec{q}, \alpha)$ holds and for the rest of these pixels $S(\vec{q}, 3\alpha)$ holds, the pixel $\vec{p}$ remains labeled with a value of 1. Otherwise, $p$ will be labeled with a value of 0.

Preferably, a growing step is performed as a next iteration over the image. The growing step expands the static regions to pixels which are similar to the static regions. Every pixel $\vec{p}$ which is not labeled with a value of I is considered. Similar as specified for the shrinking step a region of connected pixels $\vec{q}$ is determined for which holds:

- pixel $\vec{q}$ is within a spatial neighborhood of N*M pixels. Typically N*M=21*21 pixels; and
- the pixel values of $\vec{p}$ and $\vec{q}$ are substantially mutually equal. Hence, $|f(\vec{p}) - f(\vec{q})| <\beta$.

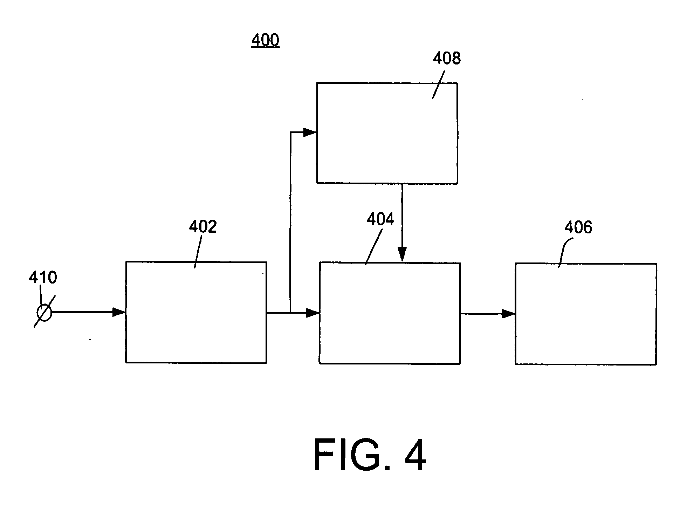

Fig. 4 schematically shows an embodiment of the image processing apparatus 400 according to the invention, comprising:

- a receiving unit 402 for receiving a video signal representing a display sequence of video images;
- an overlay detection unit 408, as described in connection with any of the Figs. 3A and 3B;
- an image processing unit 404 for calculating a sequence of output images on basis of the display sequence of video images and on basis of a graphics overlay detection signal being provided by the overlay detection unit 408; and
- a display device 406 for displaying the sequence of output images as provided by the image processing unit.

The video signal may be a broadcast signal received via an antenna or cable but may also be a signal from a storage device like a VCR (Video Cassette Recorder) or Digital Versatile Disk (DVD). The signal is provided at the input connector 410. The image processing apparatus 400 might e.g. be a TV. Alternatively the image processing apparatus 400 does not comprise the optional display device but provides the output images to an apparatus that does comprise a display device 406. Then the image processing apparatus 400 might be e.g. a set top box, a satellite-tuner, a VCR player, a DVD player or recorder. Optionally the image processing apparatus 400 comprises storage means, like a hard-disk or means for storage on removable media, e.g. optical disks. The image processing apparatus 600 might also be a system being applied by a film-studio or broadcaster.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

## Claims

1.  An overlay detection unit (300, 301) for detecting whether a particular pixel of a first image of a display sequence of video images represents a part of a graphics overlay which is merged with an input sequence of video images to create the display sequence of video images, the overlay detection unit (300, 301) comprising:

    - first testing means (302) for testing whether a first difference (D11) between a first value of the particular pixel (P(1,n)) and a second value of a corresponding pixel (P(1,n-1)) of a second image of the display sequence of video images is less than a first predetermined threshold (T1);
    - second testing means (304) for testing whether a second difference (D22) between a third value of a second pixel (P(2,n)), being located in a spatial neighborhood of the particular pixel (P(1,n)), and a fourth value of a fourth pixel (P(2,n-1)) of the second image of the display sequence of video images, corresponding to the second pixel (P(2,n)), is less than a second predetermined threshold (T2);
    - third testing means (306) for testing whether a third difference (D12) between the first value of the particular pixel (P(1,n)) and the third value of the second pixel (P(2,n)) is less than a third predetermined threshold (T3); and
    - establishing means (308) for establishing that the particular pixel represents the part of the graphics overlay if the first difference (D11) is less than the first predetermined threshold (T1), the second difference (D22) is less than the second predetermined threshold (T2) and the third difference (D12) is less than the third predetermined threshold (T3).

2.  An overlay detection unit (301) as claimed in claim 1, further comprising fourth testing means for testing whether the particular pixel belongs to a group of pixels for which a first motion vector has been estimated which is equal to a null motion vector.

3.  An overlay detection unit (301) as claimed in claim 1, being arranged to test whether a fourth difference (D11p) between the first value of the particular pixel (P(1,n)) and a fourth value of a corresponding pixel (P(1,n+1)) of a third image of the display sequence of video images is less than the first predetermined threshold (T1).

4.  An overlay detection unit (300, 301) as claimed in claim 1, being arranged to test whether a fifth difference (D13)

between the first value of the particular pixel (P(1,n)) and a fourth value of a third pixel (P(3,n)), being located in the spatial neighborhood of the particular pixel (P(1,n)) is less than the third predetermined threshold (T3).

5. An overlay detection unit (300, 301) as claimed in claim 4, being arranged to test whether the particular pixel (P(1,n)), the second pixel (P(2,n)) and the third pixel (P(3,n)) form a set of mutually connected pixels.

6. An overlay detection unit (301) as claimed in claim 1, wherein for the second pixel (P(2,n)) has been established that it represents a further part of the graphics overlay.

7. An image processing apparatus (400) comprising:

- receiving means (402) for receiving a signal corresponding to a display sequence of video images;
- an overlay detection unit (408) as claimed in any of the claims 1 to 6 for detecting whether a particular pixel of a first image of the display sequence of video images represents a part of a graphics overlay which is merged with an input sequence of video images to create the display sequence of video images; and
- an image processing unit (404) for calculating a sequence of output images on basis of the display sequence of video images under control of a graphics overlay detection signal being provided by the overlay detection unit (408).

8. An image processing apparatus (400) as claimed in claim 7, wherein the image processing unit (404) is a temporal up-conversion unit.

9. An image processing apparatus (400) as claimed in claim 7, further comprising a display device (406) for displaying the output images.

10. A method of detecting whether a particular pixel of a first image of a display sequence of video images represents a part of a graphics overlay which is merged with an input sequence of video images to create the display sequence of video images, the method comprising:

- testing whether a first difference (D11) between a first value of the particular pixel (P(1,n)) and a second value of a corresponding pixel (P(1,n-1)) of a second image of the display sequence of video images is less than a first predetermined threshold (T1);
- testing whether a second difference (D22) between a third value of a second pixel (P(2,n)), being located in a spatial neighborhood of the particular pixel (P(1,n)), and a fourth value of a fourth pixel (P(2,n-1)) of the second image of the display sequence of video images, corresponding to the second pixel (P(2,n)), is less than a second predetermined threshold (T2);
- testing whether a third difference (D12) between the first value of the particular pixel (P(1,n)) and the third value of the second pixel (P(2,n)) is less than a third predetermined threshold (T3); and
- establishing that the particular pixel represents the part of the graphics overlay if the first difference (D11) is less than the first predetermined threshold (T1), the second difference (D22) is less than the second predetermined threshold (T2) and the third difference (D 12) is less than the third predetermined threshold (T3).

11. A computer program product to be loaded by a computer arrangement, comprising instructions to detect whether a particular pixel of a first image of a display sequence of video images represents a part of a graphics overlay which is merged with an input sequence of video images to create the display sequence of video images, the computer arrangement comprising processing means and a memory, the computer program product, after being loaded, providing said processing means with the capability to carry out:

- testing whether a first difference (D11) between a first value of the particular pixel (P(1,n)) and a second value of a corresponding pixel (P(1,n-1)) of a second image of the display sequence of video images is less than a first predetermined threshold (T1);
- testing whether a second difference (D22) between a third value of a second pixel (P(2,n)), being located in a spatial neighborhood of the particular pixel (P(1,n)), and a fourth value of a fourth pixel (P(2,n-1)) of the second image of the display sequence of video images, corresponding to the second pixel (P(2,n)), is less than a second predetermined threshold (T2);
- testing whether a third difference (D12) between the first value of the particular pixel (P(1,n)) and the third value of the second pixel (P(2,n)) is less than a third predetermined threshold (T3); and
- establishing that the particular pixel represents the part of the graphics overlay if the first difference (D11) is

**EP 1 654 703 B1**

less than the first predetermined threshold (T1), the second difference (D22) is less than the second predetermined threshold (T2) and the third difference (D12) is less than the third predetermined threshold (T3).

**Patentansprüche**

1. Überlagerungsdetektionseinheit (300, 301) um zu detektieren, ob ein bestimmtes Pixel eines ersten Bildes einer Wiedergabesequenz von Videobildern einen Teil einer Grafiküberlagerung darstellt, die mit einer Eingangssequenz von Videobildern zusammengefügt wird zum Schaffen der Wiedergabesequenz von Videobildern, wobei die Überlagerungsdetektionseinheit (300, 301) die nachfolgenden Elemente umfasst:

    - erste Testmittel (302) um zu testen, ob eine erste Differenz (D11) zwischen einem ersten Wert eines bestimmten Pixels (P(1,n)) und einem zweiten Wert eines entsprechenden Pixels (P(1,n-1)) eines zweiten Bildes der Wiedergabesequenz von Videosignalen kleiner ist als eine erste vorbestimmte Schwelle (T1);
    - zweite Testmittel (304) um zu testen, ob eine zweite Differenz (D22) zwischen einem dritten Wert eines zweiten Pixels (P(2,n)), das sich in einer räumlichen Nähe des betreffenden Pixels (P(1,n)) befindet, und einem vierten Wert eines vierten Pixels (P(2,n-1)) des zweiten Bildes der Wiedergabesequenz von Videobildern, die mit dem zweiten Pixel (P(2,n)) übereinstimmen, kleiner ist als eine zweite vorbestimmte Schwelle (T2);
    - dritte Testmittel (306) um zu testen, ob eine dritte Differenz (D 12) zwischen dem ersten Wert des bestimmten Pixels (P(1,n)) und dem dritten Wert des zweiten Pixels (P(2,n)) kleiner ist als eine dritte vorbestimmte Schwelle (T3); und
    - Nachweismittel (308) um nachzuweisen, dass das betreffende Pixel den Teil der Graphiküberlagerung darstellt, wenn die erste Differenz (D11) kleiner ist als die erste vorbestimmte Schwelle (T1), die zweite Differenz (D22) kleiner ist als die zweite vorbestimmte Schwelle (T2) und die dritte Differenz (D12) kleiner ist als die dritte vorbestimmte Schwelle (T3).

2. Überlagerungsdetektionseinheit (301) nach Anspruch 1, wobei die Einheit weiterhin vierte Testmittel aufweist um zu testen, ob das bestimmte Pixel zu einer Gruppe von Pixeln gehört, für die ein erster Bewegungsvektor geschätzt worden ist, der einem Nullbewegungsvektor entspricht.

3. Überlagerungsdetektionseinheit (301) nach Anspruch 1, vorgesehen um zu testen, ob eine vierte Differenz (D11p) zwischen dem ersten Wert des bestimmten Pixels (P(1,n)) und einem vierten Wert eines entsprechenden Pixels (P(1,n+1)) eines dritten Bildes der Wiedergabesequenz von Videobildern kleiner ist als die erste vorbestimmte Schwelle (T1).

4. Überlagerungsdetektionseinheit (300, 301) nach Anspruch 1, vorgesehen um zu testen, ob eine fünfte Differenz (D13) zwischen dem ersten Wert des bestimmten Pixels (P(1,n)) und einem vierten Wert eines dritten Pixels (P(3,n)), das sich in der räumlichen Nähe des bestimmten Pixels (P(1,n)) befindet, kleiner ist als die dritte vorbestimmte Schwelle (T3).

5. Überlagerungsdetektionseinheit (300, 301) nach Anspruch 4, vorgesehen um zu testen, ob das bestimmte Pixel (P(1,n)), das zweite Pixel (P(2,n)) und das dritte Pixel (P(3,n)) einen Satz miteinander verbundener Pixel bilden.

6. Überlagerungsdetektionseinheit (301) nach Anspruch 1, wobei für das zweite Pixel (P(2,n)) festgestellt worden ist, dass es einen weiteren Teil der graphischen Überlagerung bildet.

7. Bildverarbeitungsanordnung (400), welche die nachfolgenden Elemente umfasst:

    - Empfangsmittel (402) zum Empfangen eines Signals entsprechend einer Wiedergabesequenz von Videobildern;
    - eine Überlagerungsdetektionseinheit (408) nach einem der Ansprüche 1 bis 6 um zu detektieren, ob ein bestimmtes Pixel eines ersten Bildes der Wiedergabesequenz von Videobildern einen Teil einer graphischen Überlagerung darstellt, die mit einer Eingangssequenz von Videobildern zusammengefügt wird zum Schaffen der Wiedergabesequenz von Videobildern; und
    - eine Bildverarbeitungseinheit (404) zum Berechnen einer Sequenz von Ausgangsbildern auf Basis der Wiedergabesequenz von Videobildern unter Ansteuerung eines graphischen Überlagerungsdetektionssignals, das von der Überlagerungsdetektionseinheit (408) geliefert wird.

9

8.  Bildverarbeitungsanordnung (400) nach Anspruch 7, wobei die Bildverarbeitungseinheit (404) eine zeitweilige Aufwärtsmischeinheit ist.

9.  Bildverarbeitungsanordnung (400) nach Anspruch 7, weiterhin mit einer Wiedergabeanordnung (406) zum Wiedergeben der Ausgangsbilder.

10. Verfahren um zu detektieren, ob ein bestimmtes Pixel eines ersten Bildes einer Wiedergabesequenz von Videobildern einen Teil einer graphischen Überlagerung darstellt, die mit einer Eingangssequenz von Videobildern zusammengefügt wird zum Schaffen der Wiedergabesequenz von Videobildern, wobei das Verfahren die nachfolgenden Verfahrensschritte umfasst:

    - das Testen, ob eine erste Differenz (D11) zwischen einem ersten Wert des bestimmten Pixels (P(1,n)) und einem zweiten Wert eines entsprechenden Pixels (P(1,n-1)) eines zweiten Bildes der Wiedergabesequenz von Videobildern kleiner ist als eine erste vorbestimmte Schwelle (T1);
    - das Testen, ob eine zweite Differenz (D22) zwischen einem dritten Wert eines zweiten Pixels (P(2,n)), das sich in einer räumlichen Nähe des betreffenden Pixels (P(1,n)) befindet, und einem vierten Wert eines vierten Pixels (P(2,n-1)) des zweiten Bildes der Wiedergabesequenz von Videobildern, die mit dem zweiten Pixel (P(2,n)) übereinstimmen, kleiner ist als eine zweite vorbestimmte Schwelle (T2);
    - das Testen, ob eine dritte Differenz (D12) zwischen dem ersten Wert des bestimmten Pixels (P(1,n)) und dem dritten Wert des zweiten Pixels (P(2,n)) kleiner ist als eine dritte vorbestimmte Schwelle (T3); und
    - das Nachweisen, dass das betreffende Pixel den Teil der Graphiküberlagerung darstellt, wenn die erste Differenz (D 11) kleiner ist als die erste vorbestimmte Schwelle (T1), die zweite Differenz (D22) kleiner ist als die zweite vorbestimmte Schwelle (T2) und die dritte Differenz (D12) kleiner ist als die dritte vorbestimmte Schwelle (T3).

11. Computerprogrammprodukt, das von einer Computeranordnung geladen werden soll, mit Instruktionen um zu detektieren, ob ein bestimmtes Pixel eines ersten Bildes einer Wiedergabesequenz von Videobildern einen Teil einer graphischen Überlagerung darstellt, die mit einer Eingangssequenz von Videobildern zusammengefügt wird zum Schaffen der Wiedergabesequenz von Videobildern, wobei die Computeranordnung Verarbeitungsmittel und einen Speicher aufweist, wobei das Computerprogrammprodukt nach Ladung die genannten Verarbeitungsmittel bildet mit der Fähigkeit Folgendes durchzuführen:

    - das Testen, ob eine erste Differenz (D11) zwischen einem ersten Wert des bestimmten Pixels (P(1,n)) und einem zweiten Wert eines entsprechenden Pixels (P(1,n-1)) eines zweiten Bildes der Wiedergabesequenz von Videobildern kleiner ist als eine erste vorbestimmte Schwelle (T1);
    - das Testen, ob eine zweite Differenz (D22) zwischen einem dritten Wert eines zweiten Pixels (P(2,n)), das sich in einer räumlichen Nähe des betreffenden Pixels (P(1,n)) befindet, und einem vierten Wert eines vierten Pixels (P(2,n-1)) des zweiten Bildes der Wiedergabesequenz von Videobildern, die mit dem zweiten Pixel (P(2,n)) übereinstimmen, kleiner ist als eine zweite vorbestimmte Schwelle (T2);
    - das Testen, ob eine dritte Differenz (D12) zwischen dem ersten Wert des bestimmten Pixels (P(1,n)) und dem dritten Wert des zweiten Pixels (P(2,n)) kleiner ist als eine dritte vorbestimmte Schwelle (T3); und
    - das Nachweisen, dass das betreffende Pixel den Teil der Graphiküberlagerung darstellt, wenn die erste Differenz (D11) kleiner ist als die erste vorbestimmte Schwelle (T1), die zweite Differenz (D22) kleiner ist als die zweite vorbestimmte Schwelle (T2) und die dritte Differenz (D12) kleiner ist als die dritte vorbestimmte Schwelle (T3).

## Revendications

1.  Unité de détection de superposition (300, 301) pour détecter si un pixel particulier d'une première image d'une séquence d'affichage d'images vidéo représente ou non une partie d'une superposition graphique qui est fusionnée avec une séquence d'entrée d'images vidéo pour créer la séquence d'affichage d'images vidéo, l'unité de détection de superposition (300, 301) comprenant:

    - un premier moyen de test (302) pour tester si une première différence (D11) entre une première valeur du pixel particulier (P(1,n)) et une deuxième valeur d'un pixel correspondant (P(1,n-1)) d'une deuxième image de la séquence d'affichage d'images vidéo est ou non inférieure à un premier seuil prédéterminé (T1);
    - un deuxième moyen de test 304 pour tester si une deuxième différence (D22) entre une troisième valeur d'un deuxième pixel (P(2,n)), situé dans un voisinage spatial du pixel particulier (P(1,n)), et une quatrième valeur d'un quatrième pixel (P(2,n-1)) de la deuxième image de la séquence d'affichage d'images vidéo, correspondant au deuxième pixel (P(2,n)), est ou non inférieure à un deuxième seuil prédéterminé (T2);

- un troisième moyen de test (306) pour tester si une troisième différence (D12) entre la première valeur du pixel particulier (P(1,n)) et la troisième valeur du deuxième pixel (P(2,n)) est ou non inférieure à un troisième seuil prédéterminé (T3); et

- un moyen d'établissement (308) pour établir que le pixel particulier représente la partie de la superposition graphique si la première différence (D11) est inférieure au premier seuil prédéterminé (T1), la deuxième différence (D22) est inférieure au deuxième seuil prédéterminé (T2) et la troisième différence (D12) est inférieure au troisième seuil prédéterminé (T3).

2. Unité de détection de superposition (301) selon la revendication 1, comprenant de plus un quatrième moyen de test pour tester si le pixel particulier appartient ou non à un groupe de pixels pour lequel un premier vecteur de mouvement a été estimé, et qui est égal à un vecteur de mouvement nul.

3. Unité de détection de superposition (301) selon la revendication 1, aménagée pour tester si une quatrième différence (D11p) entre la première valeur du pixel particulier (P(1,n)) et une quatrième valeur d'un pixel correspondant (P(1,n+1)) d'une troisième image de la séquence d'affichage d'images vidéo est ou non inférieure au premier seuil prédéterminé (T1);

4. Unité de détection de superposition (300, 301) selon la revendication 1, aménagée pour tester si une cinquième différence (D13) entre la première valeur du pixel particulier (P(1,n)) et une quatrième valeur d'un troisième pixel (P(3,n)), situé dans le voisinage spatial du pixel particulier (P(1,n)), est ou non inférieure à un troisième seuil prédéterminé (T3).

5. Unité de détection de superposition (300, 301) selon la revendication 4, étant aménagée pour tester si le pixel particulier (P(1,n)), le deuxième pixel (P(2,n)) et le troisième pixel (P(3,n)) forment ou non un ensemble de pixels connectés entre eux.

6. Unité de détection de superposition (301) selon la revendication 1, dans laquelle pour le deuxième pixel (P(2,n)), on a établi qu'il représente une autre partie de la superposition graphique.

7. Appareil de traitement d'image (400) comprenant:

- un moyen de réception (402) pour recevoir un signal correspondant à une séquence d'affichage d'images vidéo;
- une unité de détection de superposition (408) selon l'une quelconque des revendications 1 à 6, pour détecter si un pixel particulier d'une première image de la séquence d'affichage d'images vidéo représente ou non une partie d'une superposition graphique qui est fusionnée avec une séquence d'entrée d'images vidéo pour créer la séquence d'affichage d'images vidéo; et
- une unité de traitement d'image (404) pour calculer une séquence d'images de sortie sur la base de la séquence d'affichage d'images vidéo sous la commande d'un signal de détection de superposition graphique qui est fourni par l'unité de détection de superposition (408).

8. Appareil de traitement d'image (400) selon la revendication 7, dans lequel l'unité de traitement d'image (404) est une unité de conversion vers le haut temporelle.

9. Appareil de traitement d'image (400) selon la revendication 7, comprenant de plus un dispositif d'affichage (406) pour afficher les images de sortie.

10. Procédé pour détecter si un pixel particulier d'une première image d'une séquence d'affichage d'images vidéo représente ou non une partie d'une superposition graphique qui est fusionnée avec une séquence d'entrée d'images vidéo pour créer la séquence d'affichage d'images vidéo, le procédé comprenant les étapes suivantes:

- tester si une première différence (D11) entre une première valeur du pixel particulier (P(1,n)) et une deuxième valeur d'un pixel correspondant (P(1,n-1)) d'une deuxième image de la séquence d'affichage d'images vidéo est ou non inférieure à un premier seuil prédéterminé (T1);
- tester si une deuxième différence (D22) entre une troisième valeur d'un deuxième pixel (P(2,n)), situé dans un voisinage spatial du pixel particulier (P(1,n)), et une quatrième valeur d'un quatrième pixel (P(2,n-1)) de la deuxième image de la séquence d'affichage d'images vidéo, correspondant au deuxième pixel (P(2,n)), est ou non inférieure à un deuxième seuil prédéterminé (T2);

- tester si une troisième différence (D12) entre la première valeur du pixel particulier (P(1,n)) et la troisième valeur du deuxième pixel (P(2,n)) est ou non inférieure à un troisième seuil prédéterminé (T3); et

- établir que le pixel particulier représente la partie de la superposition graphique si la première différence (D11) est inférieure au premier seuil prédéterminé (T1), la deuxième différence (D22) est inférieure au deuxième seuil prédéterminé (T2) et la troisième différence (D12) est inférieure au troisième seuil prédéterminé (T3).

11. Produit programme informatique à charger par un aménagement informatique, comprenant des instructions pour détecter si un pixel particulier d'une première image d'une séquence d'affichage d'images vidéo représente ou non une partie d'une superposition graphique qui est fusionnée avec une séquence d'entrée d'images vidéo pour créer la séquence d'affichage d'images vidéo, l'aménagement informatique comprenant un moyen de traitement et une mémoire, le produit programme informatique, après avoir été chargé, fournissant audit moyen de traitement la capacité de réaliser les étapes suivantes:

- tester si une première différence (D11) entre une première valeur du pixel particulier (P(1,n)) et une deuxième valeur d'un pixel correspondant (P(1,n-1)) d'une deuxième image de la séquence d'affichage d'images vidéo est ou non inférieure à un premier seuil prédéterminé (T1);

- tester si une deuxième différence (D22) entre une troisième valeur d'un deuxième pixel (P(2,n)), situé dans un voisinage spatial du pixel particulier (P(1,n)), et une quatrième valeur d'un quatrième pixel (P(2,n-1)) de la deuxième image de la séquence d'affichage d'images vidéo, correspondant au deuxième pixel (P(2,n)), est ou non inférieure à un deuxième seuil prédéterminé (T2);

- tester si une troisième différence (D12) entre la première valeur du pixel particulier (P(1,n)) et la troisième valeur du deuxième pixel (P(2,n)) est ou non inférieure à un troisième seuil prédéterminé (T3); et

- établir que le pixel particulier représente la partie de la superposition graphique si la première différence (D11) est inférieure au premier seuil prédéterminé (T1), la deuxième différence (D22) est inférieure au deuxième seuil prédéterminé (T2) et la troisième différence (D12) est inférieure au troisième seuil prédéterminé (T3).

FIG. 1A

104

102

100

FIG. 1B

EP 1 654 703 B1

FIG. 2A

EP 1 654 703 B1

**200**

**202**

**204**

D11

D12

P(1,n)

D13

P(3,n)

P(1,n-1)

P(2,n-1)

P(2,n)

P(1,n+1)

D22

D11p

# FIG. 2B

FIG. 3A

EP 1 654 703 B1

FIG. 3B

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- XP 010650360

**Non-patent literature cited in the description**

- Video processing for multimedia systems. **G. DE HAAN.** Video processing for multimedia systems
- **TSENG B L et al.** Improved text overlay detection in videos using a fusion based classifier. *CONFERENCE PROCEEDINGS ARTICLE,* 06 July 2003, vol. 3, 473-476
- **G. DE HAAN.** True-Motion Estimation with 3-D Recursive Search Block Matching. *IEEE Transactions on circuits and systems for video technology,* October 1993, vol. 3 (5), 368-379